# EUROPEAN PATENT SPECIFICATION

(11) **EP 2 950 039 B1**
(45) Date of publication and mention of the grant of the patent: **28.06.2023**
(21) Application number: 13877438.5
(22) Date of filing: 14.11.2013
(51) Int. Cl.: G01B 11/00, G01C 3/06, G01B 11/24, G01B 11/02, G01B 11/245

(54) **CONFOCAL MEASUREMENT DEVICE**
KONFOKALE MESSVORRICHTUNG
DISPOSITIF DE MESURE CONFOCAL

(30) Priority: 15.03.2013 JP 2013054037
(43) Date of publication of application: 02.12.2015
(73) Proprietor: Omron Corporation, Kyoto-shi, Kyoto 600-8530 (JP)
(72) Inventor: ARAKAWA, Masayuki, Kyoto-shi, Kyoto 600-8530 (JP); MATSUI, Yuki, Kyoto-shi, Kyoto 600-8530 (JP); HAYAKAWA, Masayuki, Kyoto-shi, Kyoto 600-8530 (JP); OTA, Jun, Kyoto-shi, Kyoto 600-8530 (JP)
(74) Representative: Horn Kleimann Waitzhofer Patentanwälte PartG mbB
(86) International application number: PCT/JP2013/080796
(87) International publication number: WO 2014/141535

(56) References cited:
- EP-A2- 1 607 041
- EP-A2- 1 941 843
- WO-A1-2010/133485
- DE-A1-102005 043 627
- DE-A1-102005 052 743
- DE-A1-102007 044 530
- JP-A- S6 073 405
- JP-A- 2006 058 056
- JP-A- 2007 040 714
- JP-A- 2007 040 714
- JP-A- 2010 026 344
- JP-A- 2011 017 552
- JP-A- 2011 017 552
- JP-A- 2012 047 743
- JP-A- 2012 208 102
- US-A- 5 659 420
- US-A1- 2009 021 750
- US-A1- 2011 080 576
- US-A1- 2012 316 830
- US-B1- 6 674 572

## Description

### Technical Field

The present invention relates generally to a measurement device that performs contactless measurement of the profile at multiple points on a measurement object, and specifically to a confocal measurement device that employs confocal optics to measure of the profile at multiple points on a measurement object.

### Background Art

Japanese Unexamined Patent Application Publication No. 2011-017552 (Patent Document 1) discloses a type of measurement device that perform contactless measurement of the profile at multiple points on a measurement object, and particularly a confocal measurement device that employs confocal optics to measure the profile at multiple points on a measurement object. The confocal measurement device disclosed in Patent Document 1 is configured from a plurality of probes, a single detection unit, and a single monitor. A probe is made up of an optical fiber and an achromatic lens. The detection light from the probe is output from the optical fibers arranged in a single line orthogonal to the page. The detection light is converted into parallel beams with a collimating lens, separated by diffraction grating, and concentrated onto the surface of a two-dimensional imaging element using a condenser.

Given that a diffraction grating converts light into a spectrum depending on the angle of incidence, the location at which the light beams concentrate on the surface of the two-dimensional imaging element varies depending on the color. Accordingly, the vertical height of a point of light displayed on the monitor changes in accordance with the profile detected by each of the probes, thus allowing measurement of the profile at multiple points on the measurement object.

Japanese Unexamined Patent Application Publication No. 2012-047743 (Patent Document 2) discloses a different confocal measurement device that uses confocal optics to measure the profile at multiple points on a measurement object. The confocal measurement device disclosed in Patent Document 2 includes an optical pen and an electronics portion. The optical pen includes a fiber optic connector, a housing, and an optics portion. The fiber optic connector is attached at the end of the housing, and receives an input-output optical fiber through a fiber optical cable covering the input-output optical fiber. The input-output optical fiber outputs source light via a fiber aperture portion (confocal aperture portion), and receives reflected measurement signal light through the fiber aperture portion.

Moreover, a dual-beam assembly may be attached to the confocal measurement device disclosed in Patent Document 2. The dual-beam assembly is capable of outputting a first measurement beam along a first measurement axis, and a second measurement beam along a second measurement axis. Therefore, the confocal measurement device disclosed in Patent Document 2 is capable of measuring the profile of the measurement object using the first measurement beam while measuring the profile at another point on the measurement object using the second measurement beam.

A first reflective element is arranged in the dual-beam assembly along the light path of the source beam from the optical pen. This first reflective element essentially splits the source beam into a first measurement beam and a second measurement beam. That is, the first reflective element is a beam splitter that divides the source beam from the optical pen. Consequently, the confocal measurement device disclosed in Patent Document 2 uses a beam splitter in order to measure the profile at multiple points on the measurement object.

DE 10 2005 052 743 A1 describes a measurement system having at least one light source which emits non-monochromatic light. This light is supplied by an optical waveguide device, which contains a plurality of optical fibers, to a measurement head in which a chromatically uncorrected objective is located. This images the adjacent end surfaces of the two optical fibers on different planes, as a function of the wavelength of the light.

DE 10 2007 044530 A1, US 2009/021750 A1, US 6 674 572 B1, JP 2007 040 714 A, JP 2010 026 344 A, WO 2010 133 485 A1, EP 1 607 041 A2, US 2012 316 830 A1 and EP 1 941 843 A2 disclose further confocal measurement devices.

### Related Art Documents

### Patent Documents

Patent Document 1: Japanese Unexamined Patent Application Publication No. 2011-017552
Patent Document 2: Japanese Unexamined Patent Application Publication No. 2012-047743

### SUMMARY OF THE INVENTION

### Problems to be Solved by the Invention

However, the confocal measurement device disclosed in Patent Document 1 requires the light receiving portion to be configured with a two-dimensional imaging element in order to measure the profile at multiple points on the measurement object. Two-dimensional imaging elements are more expensive than one-dimensional imaging elements, and thus adopting a two-dimensional imaging element disadvantageously increases the production cost of the confocal measurement device.

The two-dimensional imaging element includes more measurement points and thus requires more time to acquire the corresponding measurement signals compared to the one-dimensional imaging element. Therefore, a confocal measurement device adopting a two-dimensional imaging element does not lend itself to high-speed measurement of the profile at multiple points on the measurement object. Finally, two-dimensional imaging elements are larger than one-dimensional imaging elements, and thus adopting a two-dimensional imaging element disadvantageously increases the footprint of the confocal measurement device.

On the other hand, the confocal measurement device disclosed in Patent Document 2 employs a dual-beam assembly containing a beam splitter to measure the profile of the measurement object at multiple points. Because the beam splitter merely splits the light beams from the light source into two beams, it tends to be difficult to separate the first measurement signal from the first measurement beam from the second measurement signal from the second measurement beam, and thus it becomes necessary to adjust the position of an optical element so that the first measurement signal and the second measurement signal are separate each time the profile of a measurement object is measured.

Additionally, because the beam splitter merely divides the light beams from the source into two beams, the light intensity (amount of light) of the first measurement beam and the second measurement beam are roughly half the light intensity of the source light. Therefore, the signal-to-noise (S/N) ratio of the first measurement signal and the second measurement signal deteriorates, and does not lend itself to maintaining the measurement accuracy in the confocal measurement device disclosed in Patent Document 2. Note, although the S/N ratio of the confocal measurement device may be improved by increasing the measurement time, this configuration does not lend itself to high-speed measurement of the profile at multiple points on the measurement object.

With the above-mentioned issues in mind, the present invention proposes a confocal measurement device capable of high-speed measurement of the profile at multiple points on a measurement object, and having a reduced device footprint. Means for Solving the Problems

A confocal measurement device according to the present invention is provided as claimed in claim 1.

The invention is solely defined by the appended claims. Further examples that are not encompassed in the scope of the claims, even if they are indicated as "embodiments" in the description, are not part of the claimed invention. Also, the use of the expression "may" is not to be intended as optional in those examples and embodiments falling within the scope of the claimed invention.

The plurality of confocal optics units in the confocal measurement device according to the present invention may include optical components for transmitting or blocking mutually different wavelength bands. The confocal optics units may irradiate the measurement object with the light transmitted or blocked by the optical components, and the control unit may obtain a peak wavelength for each region in the light receiving unit corresponding to the wavelength band transmitted or blocked by the optical components.

The optical components in the confocal measurement device according to the present invention may be provided at a location where light from the light source enters the confocal optics units.

In the confocal measurement device according to the present invention, a light source is provided for each of the plurality of confocal optics units for outputting light in mutually different wavelength bands. Further, the control unit obtains a peak wavelength for each region in the light receiving unit corresponding to the wavelength band output by the light sources.

In the confocal measurement device according to the present invention the light source is provided for each of the plurality of confocal optics units, and the control unit controls the timing at which the light sources emit light so that the light sources emit light in a sequence, and matches the timing at which the light sources emit light to obtain a peak wavelength matching that light emitted from the light source.

In the confocal measurement device according to the present invention the light source is provided for each of the plurality of confocal optics units; the plurality of confocal optics units may each include optical components for transmitting or blocking mutually different wavelength bands; and the confocal optics units may irradiate the measurement object with the light transmitted or blocked by the optical components. Additionally, the control unit may control the timing at which the light sources emit light so that the light sources emit light in a sequence, and may match the timing at which the light sources emit light to obtain a peak wavelength matching that light emitted from the light source for each a region in the light receiving unit corresponding to the wavelength band transmitted or blocked by the optical components.

In the confocal measurement device according to the present invention, the light receiving element in the light receiving unit may be an oblong in which the length along a direction orthogonal to the direction of one dimensional arrangement is longer than the length along the direction of one dimensional arrangement.

Finally, the confocal optics unit in the confocal measurement device according to the present invention may include: a diffraction lens that generates an axial chromatic aberration in the light output from the light source; an objective arranged toward the measurement object relative to the diffraction lens for concentrating light including the axial chromatic aberration onto the measurement object; and a pinhole for allowing light concentrated by the objective and in focus on the measurement object to pass therethrough.

### Effects

With the above-mentioned configurations, a confocal measurement device according to the present invention includes a plurality of confocal optics units that generate an axial chromatic aberration in light, irradiates a measurement object with the light while allowing the light in focus on the measurement object to passes therethrough. Further, a light guiding unit introduces the light passed through the confocal optics units into a single spectroscope. Moreover, the light dispersed is received at a light receiving unit arranged one-dimensionally along the dispersion direction of the spectrometer. A control unit obtains a peak wavelength corresponding to each in the plurality of confocal optics units from the light received at the light receiving unit. Thus the confocal measurement device according to the present invention does not require a light receiving unit with light receiving elements arranged in two dimensions, and may use a light receiving portion with the light receiving elements arranged in one dimension. This speeds up the process for acquiring the measurement signals, thereby allowing for high-speed measurement of the profile at multiple points of the measurement object. Finally, the confocal measurement device according to the present invention is provided with a light receiving unit where the light receiving elements are arranged one-dimensionally, thus compared to a device provided with a light receiving unit where the light receiving elements are arranged two-dimensionally, the size of the confocal measurement device can be reduced.

### BRIEF DESCRIPTION OF THE DRAWINGS

Figure 1 is a schematic view illustrating a configuration of a confocal measurement device according to the first embodiment falling outside the scope of the present invention.
Figure 2 is a schematic view illustrating a configuration of a branching optical fiber.
Figure 3 is a graph for describing the transmittance properties of an optical filter.
Figure 4 is a schematic view for describing a configuration of the channels in an imaging element according to the present invention.
Figure 5 is a schematic view illustrating a configuration of the optical heads.
Figure 6 is a schematic view illustrating a configuration of a confocal measurement device according to another example falling outside the scope of the present invention.
Figure 7 is a schematic view illustrating a configuration of a confocal measurement device according to an embodiment of the present invention.
Figure 8 is a schematic view illustrating a configuration of a confocal measurement device according to another example falling outside the scope of the present invention.
Figure 9 is a schematic view illustrating a configuration of a confocal measurement device according to a second embodiment of the present invention.
Figure 10 is a schematic view for describing the operation of a confocal measurement device according to the second embodiment of the present invention.
Figure 11 is a schematic view illustrating how the imaging element measures light entering the spectrometer from a plurality of optical fibers that arc bundled together.
Figure 12 is a schematic view illustrating a configuration of a confocal measurement device according to a third embodiment of the present invention.

### DETAILED DESCRIPTION

Embodiments of the present invention and other embodiments that are outside the scope of the claimed invention are described in detail below with reference to the drawings.

### First Embodiment

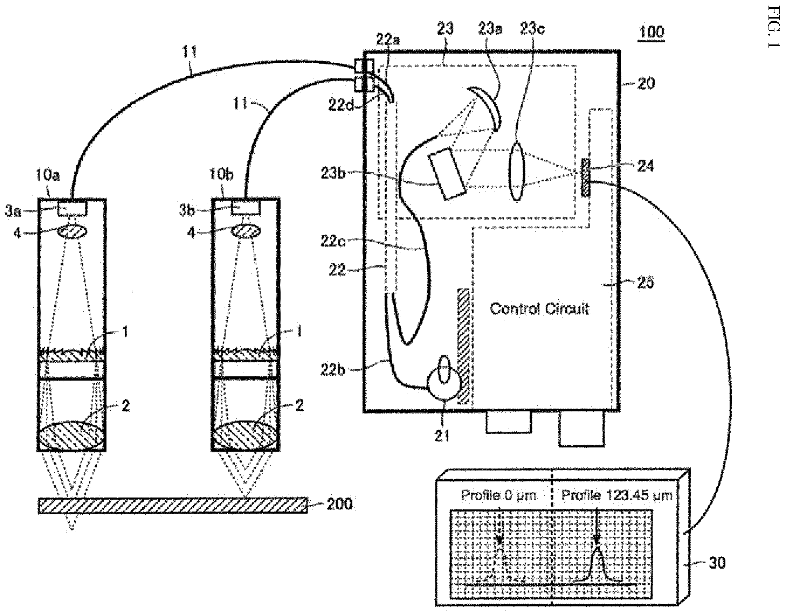

Figure 1 is a schematic view illustrating a configuration of a confocal measurement device. The confocal measurement device 100 illustrated in FIG. 1 uses the confocal optics provided in a plurality of optical heads (two, in the example illustrated in FIG. 1) to measure the profile at multiple points (two, in the example illustrated in FIG. 1) on the measurement object 200. The measurement target 200 measured by the confocal measurement device 100 may be the cell gap in a liquid crystal display panel.

The confocal measurement device 100 is provided with a first optical head 10a and a second optical head 10b containing confocal optics, a controller 20 optically coupled via an optical fiber 11, and a monitor 30 which displays signals output from the controller 20.

The first optical head 10a measures the profile at a given position on the measurement object 200. The first optical head 10a is provided with a diffraction lens 1, an objective 2 placed near the measurement object 200 relative to the diffraction lens 1; a first optical filter 3a that transmits a given specific wavelength band of light entering therein from the optical fiber 11, and a condenser 4 that concentrates the light transmitted through the first optical filter 3a onto the diffraction lens 1. The focal length of the diffraction lens 1 is greater than the difference between the distance from the diffraction lens to the objective, and the focal length of the objective.

As an optical element, the diffraction lens 1 generates an axial chromatic aberration in the light output from a light source (e.g., a white light source). The surface of the diffraction lens 1 may have microscopic reliefs such as kinoforms or binary forms (for example steps, and stairs) formed at intervals, or may be formed as a zone plate, which has periodically variable optical transmission properties. The diffraction lens 1 is not particularly limited to the above described configuration.

The objective 2 concentrates the chromatically distorted light created by the diffraction lens 1 onto the measurement target 200. A convex lens, or the like may be used for this purpose.

The first optical filter 3a transmits light incident thereon from the optical fiber 11 of a given specific wavelength band. The first optical filter 3a is provided near the location where the optical fiber 11 in the first optical head 10a are connected. The first optical filter 3a illustrated in FIG. 1 is provided inside the first optical head 10a between the optical fiber 11 and the condenser 4. For example, when a white light source is used as the light source, the light from the optical fiber 11 incident on the first optical filter 3a with a wavelength of 400 nm to 600 nm is transmitted therethrough (noting that the visible light range is roughly 400 nm to 800 nm). More specifically, the first optical filter 3a may be a dichroic filter and the like that transmits a given specific wavelength.

The condenser 4 concentrates the light incident thereon so that the light entering the first optical head 10a efficiently passes through the diffraction lens 1, and may be a convex lens and the like.

The second optical head 10b measures the profile at a different location on the measurement object 200. The second optical head 10b is provided with a diffraction lens 1, an objective 2 placed near the measurement object 200 relative to the diffraction lens 1; a second optical filter 3b that transmits a given specific wavelength band of light entering therein from the optical fiber 11, and a condenser 4 that concentrates light transmitted through the second optical filter 3b onto the diffraction lens 1. Note that the portions of the second optical head 10b identical to those in the first optical head 10a are given the same reference numerals, and an explanation therefor is not repeated.

The second optical filter 3b transmits light incident thereon from the optical fiber 11 of a wavelength band different from the wavelength band transmitted by the first optical filter 3a. The second optical filter 3b is provided near the location where the optical fiber 11 and the second optical head 10b are connected. The second optical filter 3b illustrated in FIG. 1 is provided inside the second optical head 10b between the optical fiber 11 and the condenser 4. For example, when a white light source is used as the light source, the light from the optical fiber 11 incident on the second optical filter 3b with a wavelength of 600 nm to 800 nm is transmitted therethrough (noting that the visible light range is roughly 400 nm to 800 nm). More specifically, the second optical filter 3b may be a dichroic filter and the like that transmits a wavelength band that is different from the wavelength band transmitted by the first optical filter 3a.

Here, the confocal measurement device 100 includes two optical heads: the first optical head 10a and the second optical head 10b. However in the description below, the first optical head 10a and the second optical head 10b are collectively described as the optical heads 10 when referring to features common to the first optical head 10a and the second optical head 10b. The optical heads 10 are the confocal optics units that generate an axial chromatic aberration in the light output from the light source and allow light in focus on the measurement object 200 to pass therethrough.

The light emitted from the light source is guided to the optical heads 10 via the optical fiber 11. The optical fiber 11 establishes an optical path from the optical heads 10 to the controller 20 and acts as a pinhole. That is, the light concentrated by the objective and in focus on the measurement target 200 focuses at the aperture in the optical fiber 11. Therefore the optical fiber 11 blocks light of wavelengths not in focus on the measurement target 200, and functions as a pinhole by allowing light in focus on the measurement target 200 to pass therethrough. Using the optical fiber 11 as the optical path from the optical heads 10 to the controller 20 eliminates the need for a pinhole.

The confocal measurement device 100 may employ a configuration where the optical fiber 11 does not form the optical path from the optical heads 10 to the controller 20; however, using the optical fiber 11 for the aforementioned optical path allows the optical head 10 to be freely movable relative to the controller 20. Furthermore, providing a pinhole is necessary when the confocal measurement device 100 employs a configuration without the optical fiber 11 forming the optical path from the optical heads 10 to the controller 20; however, if the confocal measurement device 100 employs the optical fiber 11, the pinhole is unnecessary.

The controller 20 is provided with a white light emitting device (LED) 21, which acts as the white light source, a branching optical fiber 22, a spectrometer 23, an imaging element 24, and a control circuit 25. While the white LED 21 may be used as the white light source, another type of light source may be used, so long as that light source emits white light. Additionally, the light source is not limited to a white light source, and may be any light source possessing a given wavelength band.

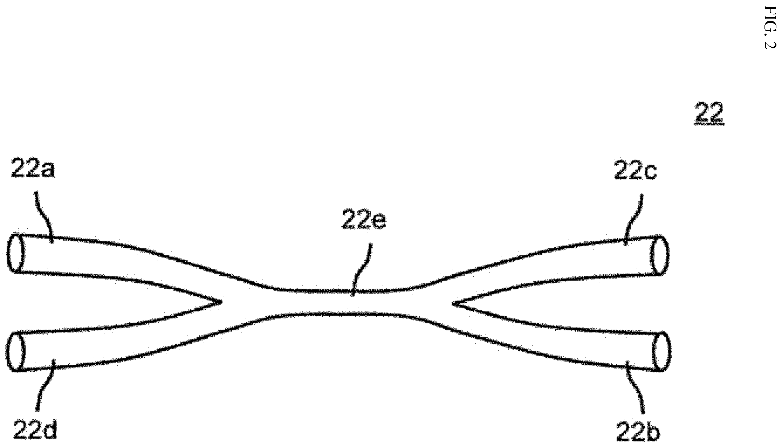

The branching optical fiber 22 includes two optical fibers 22a, 22d connected to the two optical fibers 11 extending from the first optical head 10a and the second optical head 10b, and includes two optical fibers 22b, 22c on the opposite side. The optical fiber 22b, and the optical fiber 22c are connected to the white LED 21 and the spectrometer 23, respectively. The branching optical fiber 22 may be produced by heating and fusing two optical fibers in contact with each other, and further heating up both optical fibers while pulling and stretching the fibers. FIG. 2 is a schematic view illustrating a configuration of the branching optical fiber 22. Light may be branched along two optical paths, or two optical paths may be coupled at the branching optical fiber joint 22e illustrated in FIG. 2. Therefore, the branching optical fiber 22 can guide light emitted from the white LED 21 to the two optical fibers 11, and guides light returning from the optical head 10 via the optical fibers 11 to the spectrometer 23. The optical fibers 11 and the branching optical fiber 22 make up the light guiding unit that introduces light passing through the plurality of optical heads 10 into the spectrometer 23.

The spectrometer 23 separates the light passed through the optical heads 10 by wavelength. The spectrometer 23 includes a concave mirror 23a that reflects the light returning from the optical heads 10 and converts the light into parallel beams, a diffraction grating 23b into which light reflected from the concave mirror 23a enters, and a condenser 23c which concentrates the light output from the diffraction grating 23b. The spectrometer 23 may have any configuration such as Czemy-Tumer monochromator or rotary type spectrometer, as long as the device is capable of dispersing the light returning from the optical heads 10.

The imaging element 24 may be a line complementary metal-oxide-semiconductor (CMOS) that measures the intensity of the light emitted from the spectrometer 23 or a line charge-coupled device (CCD). That is, the imaging element 24 is a light receiving unit in which light receiving elements are arranged one-dimensionally for receiving dispersed light from the spectrometer 23. Note that the imaging element 24 only measures the light intensity and is a monochrome line CMOS or line CCD. As long as the imaging element 24 can measure light intensity, the imaging element 24 may even be a color line CMOS or line CCD.

The control circuit 25 controls the operations of the white LED 21, the imaging element 24, and the like and is provided with an electronic circuit that processes the output signals from the imaging elements 24. The control circuit 25 obtains a peak intensity value from optical spectral waveforms representing the output signals from the imaging element 24. Hereby, the wavelength (peak wavelength) of light in focus on the measurement object 200 can be identified. The profile of the measurement object 200 can be measured by preliminarily establishing a relationship between the wavelength of the light in focus and the profile of the measurement object 200. Additionally, although not illustrated, the control circuit 25 includes an input interface for inputting signals that modify the operation of the white LED 21, the imaging element 24, and the like, as well as an output interface for outputting signals from the imaging element 24.

The monitor 30 displays the signals output from the imaging element 24. The monitor 30 may draw a spectral waveform for the light returning from the optical heads 10, and display, for instance, the profile of the measurement object measured by the first optical head 10a as 0 µm, and the profile of the measurement object measured by the second optical head 10b as 123.45 µm.

Using a single imaging element 24, the confocal measurement device 100 measures the profile of the measurement object 200 at a certain location using the first optical head 10a while measuring the profile of the measurement object 200 at a different location using the second optical head 10b; therefore the wavelength band differs for the wavelength of light including the axial chromatic aberration for each of the optical heads 10. That is, the first optical head 10a generates an axial chromatic aberration in light within a certain wavelength band, and the second optical head 10b generates an axial chromatic aberration in light in a wavelength band different from the light in the first optical head 10a.

In order to partition the wavelength band, the confocal measurement device 100 provides the above-described in the first optical head 10a with the first optical filter 3a, and the second optical head 10b with the second optical filter 3b. More specifically, when using a white light source, the transmittance properties of the first optical filter 3a and the second optical filter 3b are described below.

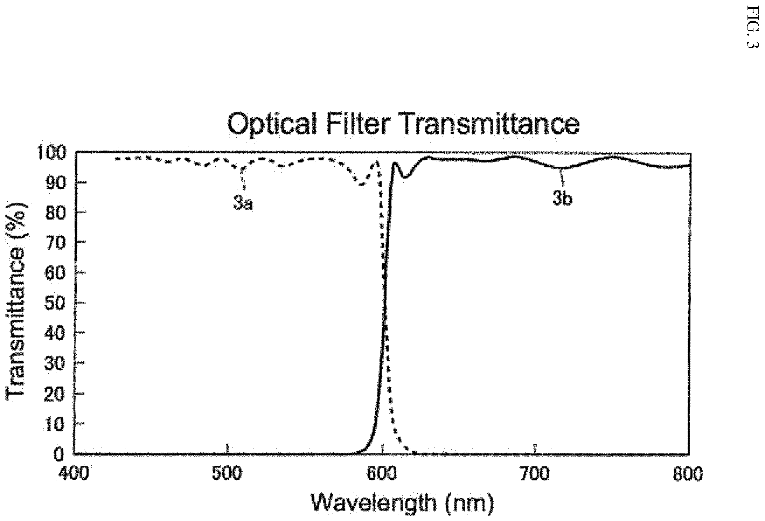

FIG. 3 is a graph for describing the transmittance properties of the optical filters. Note that, the horizontal axis represents the wavelength in nanometers (nm), and the vertical axis represents the transmittance as a percentage (%) in the graph illustrated in FIG. 3. The waveform depicted in FIG. 3 for the first optical filter 3a represents the transmittance property of the first optical filter 3a which transmits roughly 100% of light with a wavelength of 400 nm to 600 nm, and blocks light with a wavelength of 600 nm to 800 nm. The waveform depicted in FIG. 3 for the second optical filter 3b represents the transmittance property of the second optical filter 3b which transmits roughly 100% of light with a wavelength of 600 nm to 800 nm, and blocks light with a wavelength of 400 nm to 600 nm.

As illustrated by the waveform in FIG. 3, it tends to be difficult to separate light with a wavelength in the vicinity of 600 nm into different wavelength bands using only the first optical filter 3a and the second optical filter 3b. However, light may be separated into the different wavelength bands via software computations in the control circuit 25, or a computer connected thereto, or the like.

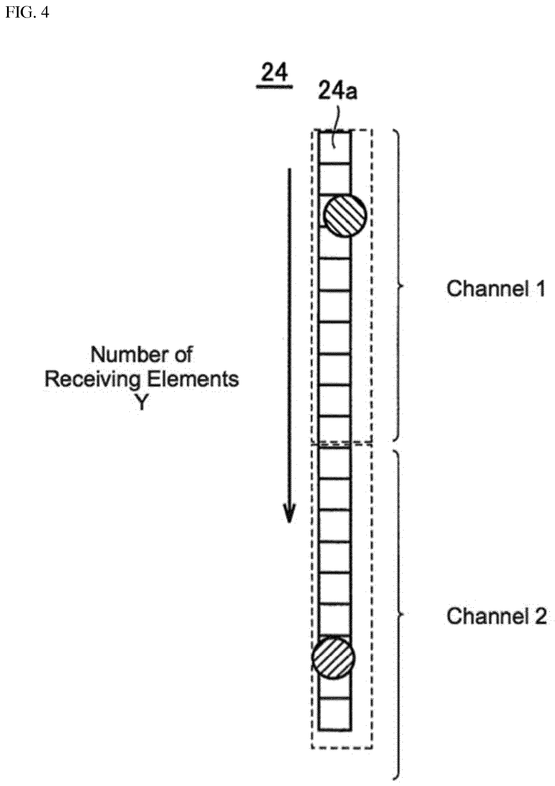

Using the first optical filter 3a and the second optical filter 3b to partition the wavelength band thereby allows the confocal measurement device 100 to divide the imaging element 24 into a region used by the first optical head 10a (channel 1) and a region used by the second optical head 10b (channel 2). FIG. 4 is a schematic view for describing a configuration of the channels in the imaging element according to the first embodiment. The imaging element 24 illustrated in FIG. 4 includes Y number of light receiving elements 24a aligned vertically in the drawing in a row. The light receiving elements 24a detect light intensity. The light spectrally separated by the spectrometer 23 having shorter wavelengths are received at the light receiving elements 24a at the upper part of FIG. 4, while the light having longer wavelengths are received at the light receiving elements 24a at the lower part of FIG. 4. Therefore, the light transmitted by the first optical filter 3a is a measurement signal received in channel 1 at the light receiving elements 24a at the upper part of FIG. 4. Whereas, the light transmitted by the second optical filter 3b is a measurement signal received in channel 2 at the light receiving elements 24a at the lower part of FIG. 4. In confocal measurement devices that does not partition the wavelength band, all the light receiving elements 24a illustrated in FIG. 4 are used by a single optical head, and therefore an imaging element 24 where the light receiving elements are arranged two-dimensionally is required when a plurality of optical heads are used.

As illustrated in FIG. 4, the light from the first optical head 10a and the light from the second optical head 10b strike in different regions but is received by the same imaging element 24. Therefore, the spectral waveforms obtained by the imaging element 24 carries a waveform representing a peak intensity value for each region corresponding to the wavelength band transmitted or blocked by the first optical filter 3a or the second optical filter 3b. The control circuit 25 reads a peak intensity value from the spectral waveform for each of the wavelengths, and measures the respective profiles on the measurement object 200 from a preliminarily determined relationship established between the wavelength of light and the profile of the measurement object 200. For instance, when the imaging element is divided into channel 1 representing a wavelength band of 400 nm to 600 nm, and channel 2 representing a wavelength band of 600 nm to 800 nm, the control circuit 25 selects the wavelength of the peak intensity value within the 400 nm to 600 nm wavelengths as the peak wavelength for channel 1, and selects the wavelength of the peak intensity value within the 600 nm to 800 nm wavelength as the peak wavelength for channel 2. The control circuit 25 measures the profiles on the measurement object measured by the first optical head 10a and the second optical head 10b on the basis of the wavelength on channel 1 and the wavelength on channel 2 respectively from a predetermined relationship established between the wavelength of light and the profile of the measurement object 200.

The confocal measurement device then draws a spectral waveform of the light returning from the first optical head 10a on the monitor 30 on the basis of the measurement signal in channel 1, and outputs for instance 0 µm as the profile of the measurement object 200 measured by the first optical head 10a. The confocal measurement device draws a spectral waveform of the light returning from the second optical head 10b on the monitor 30 on the basis of the measurement signal in channel 2, and outputs, for instance, 123.45 µm as the profile of the measurement object 200 measured by the second optical head 10b.

Thus, because the optical heads 10 irradiate the measurement object 200 with light transmitted or blocked by the optical filters, and the control circuit 25 obtains a peak wavelength for each region in an imaging element 24 corresponding to a wavelength band transmitted or blocked by each of the optical filters to measure the profile at multiple points on a measurement object 200, the confocal measurement device 100 according to the first embodiment may thus use an imaging element wherein the light receiving elements 24a are arranged one-dimensionally, without requiring an imaging element where the light receiving elements are arranged two-dimensionally. Therefore, compared to a device using an imaging element where the light receiving elements are arranged two-dimensionally, the confocal measurement device 100 according to the first embodiment may acquire the measurement signals more quickly, allowing for high-speed measurement of the profile at multiple points on the measurement object 200. Finally, because the confocal measurement device 100 according to the first embodiment is provided with the imaging element 24 where the light receiving elements 24a are arranged one-dimensionally, the confocal measurement device has a smaller footprint than a device provided with an imaging element where the light receiving elements are arranged two-dimensionally.

Additionally, the imaging element 24 wherein the light receiving elements 24a are arranged one-dimensionally, is cheaper than an imaging element where the light receiving elements are arranged two-dimensionally, thereby reducing the production cost of the confocal measurement device 100. The confocal measurement device 100 according to the first embodiment partitions the wavelength band, and therefore the imaging element 24 may be divided into measurement signal channels for each of the optical heads 10. The confocal measurement device 100 according to the first embodiment of the present invention does not divide the light intensity by partitioning the wavelength band, and thus the measurement accuracy of the device can be maintained without degrading the S/N ratio of the measurement signal.

### Modification Example 1

The confocal measurement device 100 according to the first embodiment separates the wavelengths in the light including an axial chromatic aberration into wavelength bands for each of the optical heads 10 to measure the profile at multiple points on the measurement object 200. However, the configuration of the confocal measurement device 100 according to the first embodiment described provides the first optical filter 3a and the second optical filter 3b inside the optical heads 10 between the optical fiber 11 and the condenser 4. The configuration of the confocal measurement device 100 is not limited thereto and may be configured in any desired way so long as the wavelength band can be partitioned for each of the optical heads 10. Examples of various modifications to the configuration used to partition the wavelength band for each of the optical heads 10 in the confocal measurement device 100 according to the first embodiment are described below. In the following description, the first optical filter 3a and the second optical filter 3b are referred to collectively as the optical filters 3 when discussing the features common to the first optical filter 3a and the second optical filter 3b.

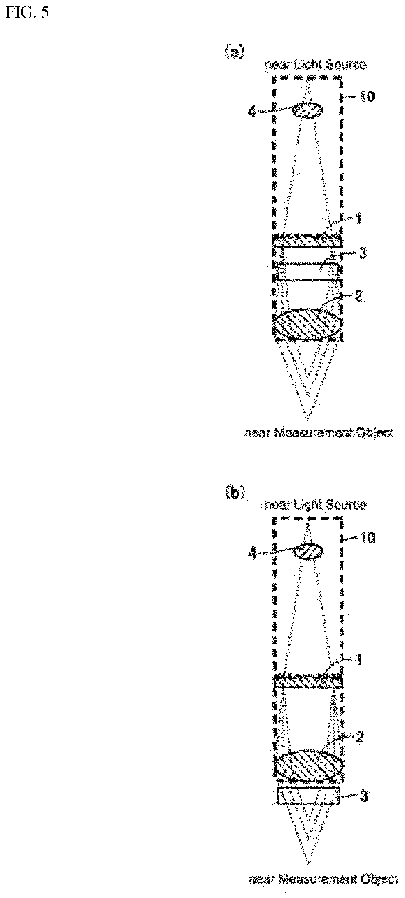

FIG. 5 is a schematic view illustrating a configuration of the optical heads 10 according to a modification to the first embodiment. FIG. 5(a) illustrates optical heads 10 with the optical filters 3 located between the diffraction lens 1 and the objective 2. FIG. 5(b) illustrates a configuration of the optical heads 10 where the optical filters 3 are located outside the optical heads 10 and between the objective 2 and the measurement object 200.

When the optical filters 3 are located as illustrated in FIG. 5(a), light converted to parallel beams by the diffraction lens 1 are transmitted through the optical filters 3 and thus advantageously increases the precision in partitioning the wavelength band. Whereas, when the optical filters 3 are located as illustrated in FIG. 5(b), the optical filters 3 may be attached to or removed from the optical heads 10, and therefore the same optical head 10 may be used at times to measure the profile at a single point on the measurement object 200 using one optical head 10, or at times to measure the profile at multiple points on the measurement object 200 using a plurality of optical heads 10.

Note that when the optical filters 3 are located as illustrated in FIG. 1, the beam of light entering therein has a smaller diameter that when the optical filters are at other locations, therefore the optical filters 3 may be made smaller, thus reducing the production cost.

### Modification Example 2

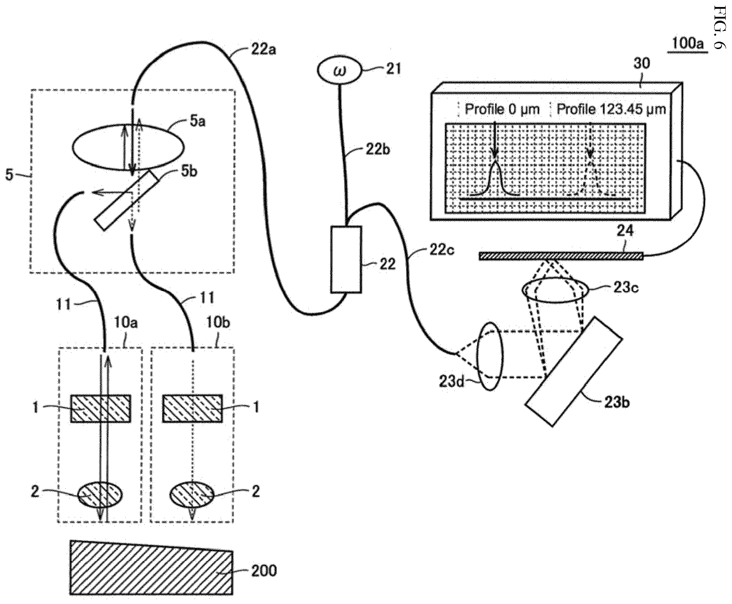

Next, a modification example using a beam splitter is described. FIG. 6 is a schematic view illustrating a configuration of a confocal measurement device. The confocal measurement device 100a illustrated in FIG. 6 is configured with a beam splitter 5 in place of the optical filters 3 for each of the optical heads 10. Note that the portions of the confocal measurement device 100a illustrated in FIG. 6 identical to those in the confocal measurement device 100 illustrated in FIG. 1 are given the same reference numerals, and an explanation therefor is not repeated. Additionally, parts of the configuration not used in the description below of the confocal measurement device 100a illustrated in FIG. 6 are omitted from the drawings even if already depicted for the confocal measurement device 100 illustrated in FIG. 1. Finally, the confocal measurement device 100a illustrated in FIG. 6 is provided with a spectrometer 23 that uses a collimating lens 23d in place of the concave mirror 23a.

The beam splitter 5 is provided between the optical fiber 11 and the branching optical fiber 22. The beam splitter 5 separates light emitted from the optical fiber 22a extending from one end of the branching optical fiber 22 (i.e. light from the white LED 21 guided by the optical fiber 22b) by wavelength band, such that light from one of the wavelength bands enters the optical fiber 11 connected to the first optical head 10a, and light from the other of the wavelength bands enters the optical fiber 11 connected to the second optical head 10b.

The beam splitter 5 contains a condenser 5a that concentrates the light output from the optical fiber 22a, and an optical mirror 5b. The optical mirror 5b separates the light concentrated by the condenser 5a into light that is transmitted therethrough and light that is reflected therefrom. The optical mirror 5b separates light into each of the wavelength bands by for instance, reflecting light of wavelengths 400 nm to 600 nm, and transmitting light of wavelengths 600 nm to 800 nm. The light reflected by the optical mirror 5b is light of wavelengths 400 nm to 600 nm, and is identical to the light transmitted through the first optical filter 3a. In contrast, the light transmitted through the optical mirror 5b is light of wavelengths 600 nm to 800 nm, and is identical to the light transmitted through the second optical filter 3b.

The confocal measurement device 100a uses the diffraction grating 1 to generate an axial chromatic aberration in the light separated by wavelength band with the beam splitter 5, and concentrates the light including the chromatic aberration onto the measurement object 200 using the objective 2. The light in focus on the measurement object 200 is guided from the optical fiber 22c to the diffraction grating 23b via the collimating lens 23d, and thereby the light separated by the aforementioned diffraction grating 23b is introduced onto the imaging element 24 by the condenser 23c in the confocal measurement device 100a. The confocal measurement device 100a draws a spectral waveform representing light incident on the imaging elements 24 on the monitor 30, and outputs the profile of the measurement object measured by the optical heads 10. Hereby, the confocal measurement device 100a is capable of measuring the profile at multiple points on the measurement object 200 in the same manner as a confocal measurement device 100 illustrated in FIG. 1.

### Modification Example 3

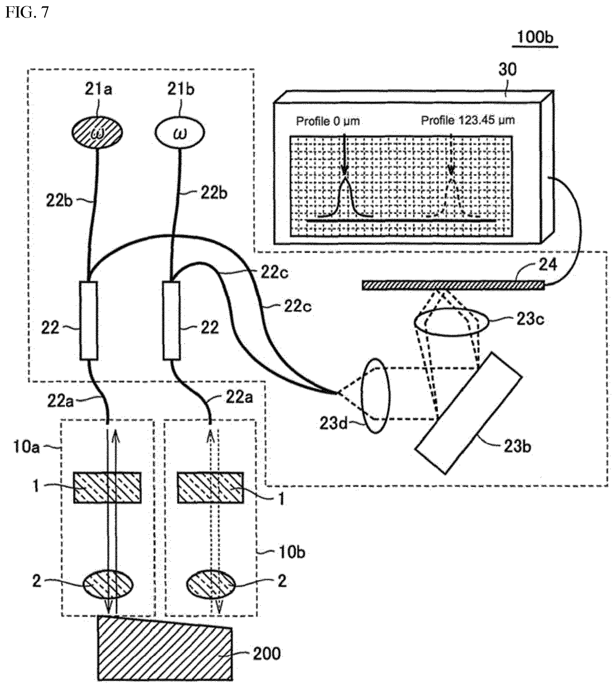

Next, a modification example using a plurality of light sources is described. FIG. 7 is a schematic view illustrating a configuration of a confocal measurement device according to an embodiment of the present invention. The confocal measurement device 100b illustrated in FIG. 7 is provided with a light source for each of the optical heads 10 in place of the optical filters 3 for each of the optical heads 10. Note that the portions of the confocal measurement device 100b illustrated in FIG. 7 identical to those in the confocal measurement device 100 illustrated in FIG. 1 are given the same reference numerals, and an explanation therefor is not repeated.
Additionally, parts of the configuration not used in the description below of the confocal measurement device 100b illustrated in FIG. 7 are omitted from the drawings even if already depicted for the confocal measurement device 100 illustrated in FIG. 1. Finally, the confocal measurement device 100b illustrated in FIG. 7 is provided with a spectrometer 23 that uses a collimating lens 23d in place of the concave mirror 23a.

A light source 21a emitting light in a given wavelength band, and a light source 21b emitting light in a wavelength band different from that of the light source 21a are provided as the light sources. For instance, the light source 21a emits light with wavelengths of 400 nm to 600 nm, and the light source 21b emits light with wavelengths of 600 nm to 800 nm. The light from the light source 21a enters the first optical head 10a via the branching optical fiber 22 and the optical fiber 11. Whereas, the light from the light source 21b enters the second optical head 10b via the branching optical fiber 22 and the optical fiber 11.

The light source 21a and the light source 21b, which emit light in different wavelength bands, are provided in the confocal measurement device 100b to respectively correspond to the first optical head 10a and the second optical head 10b. Thus, the wavelength bands are partitioned for each the first optical head 10a and the second optical head 10b. That is, the first optical head 10a uses light from the light source 21a, instead using the first optical filter 3a to separate light emitted from a white light source (i.e., the white light LED 21) into a wavelength band. The second optical head 10b similarly uses light from the light source 21b, instead of using the second optical filter 3b to separate the light emitted from a white light source (i.e., the white light LED 21) into a wavelength band.

The confocal measurement device 100b generates an axial chromatic aberration in the light from the light source 21a and the light source 21b using the diffraction lens 1, and concentrates the light including the chromatic aberration onto the measurement object 200 using the objective 2. The light in focus on the measurement object 200 is guided from the optical fiber 22c to the diffraction grating 23b via the collimating lens 23d, and thereby the light separated by the aforementioned diffraction grating 23b is introduced to the imaging element 24 by the condenser 23c in the confocal measurement device 100b. The confocal measurement device 100b draws a spectral waveform representing light incident on the imaging element 24 on the monitor 30, and outputs the profile of the measurement object measured by the optical heads 10. Hereby, the confocal measurement device 100b is capable of measuring the profile at multiple points on the measurement object in the same manner as a confocal measurement device 100 illustrated in FIG. 1.

Thus, although provided with the light sources 21a, 21b corresponding to each of the plurality of optical heads 10 to output light in mutually different wavelength bands, and obtaining a peak wavelength for each region corresponding to the wavelength band of the light output from the light sources to measure the profile at multiple points on a measurement object 200, the confocal measurement device 100 according to the third modification example is capable of measuring the profile at multiple points on the measurement object 200 in the same manner as the confocal measurement device 100 illustrated in FIG. 1.

### Modification Example 4

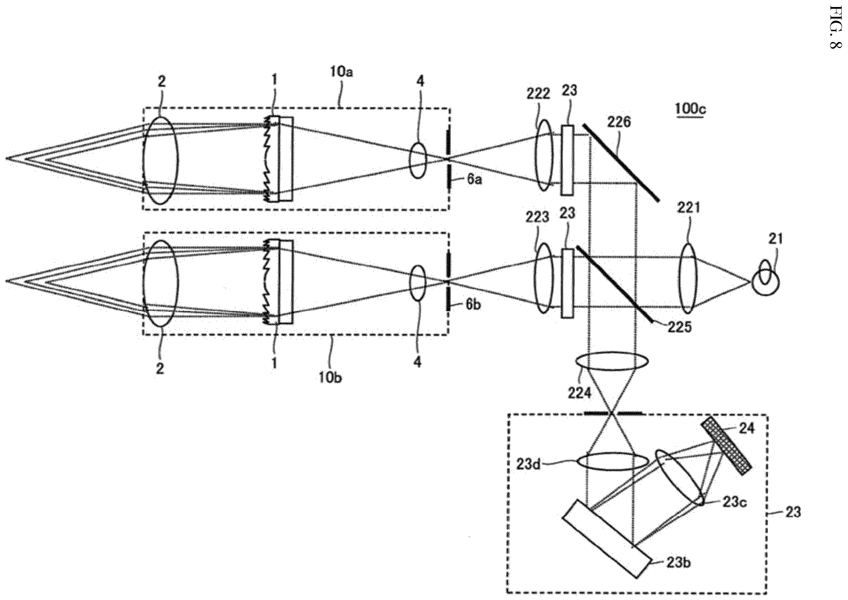

Next, a modification example where the optical fibers are omitted from the light guiding portion between the optical heads 10 and the spectrometer 23 is described. FIG. 8 is a schematic view illustrating a configuration of a confocal measurement device. The confocal measurement device 100c illustrated in FIG. 8 is provided with collimating lenses 221 - 224, a half mirror 225, and a mirror 226 in place of the branching optical fiber 22 and the optical fiber 11. Note that the portions of the confocal measurement device 100c illustrated in FIG. 8 identical to those in the confocal measurement device 100 illustrated in FIG. 1 are given the same reference numerals, and an explanation therefor is not repeated. Additionally, parts of the configuration not used in the description below of the confocal measurement device 100c illustrated in FIG. 8 are omitted from the drawings even if already depicted for the confocal measurement device 100 illustrated in FIG. 1. Finally, the confocal measurement device 100c illustrated in FIG. 8 is provided with a spectrometer 23 that uses a collimating lens 23d in place of the concave mirror 23a.

The collimating lens 221 converts the light from the light source 21 into parallel beams; and the half mirror 225 separates the parallel beams into paths traveling to the mirror 226 and traveling to the second optical filter 3b. The light reflected by the mirror 226 is transmitted through the first optical filter 3a and concentrated on a pinhole 6a in the first optical head 10a by the collimating lens 222. On the other hand, the light transmitted through the second optical filter 3b is concentrated on a pinhole 6b in the second optical head 10b by the collimating lens 223.

The light passing through the first optical head 10a and in focus on the measurement object 200 passes through the pinhole 6a and returns to the collimating lens 222. The light returning to the collimating lens 222 enters the spectrometer 23 via the first optical filter 3a, the mirror 226, the half mirror 225, and the collimating lens 224. Whereas, the light passing through the second optical head 10b and in focus on the measurement object 200 passes through the pinhole 6b and returns to the collimating lens 223. The light returning to the collimating lens 223 enters the spectrometer 23 via the second optical filter 3b, the half mirror 225, and the collimating lens 224. That is, in this modification example, the collimating lens 222 or the collimating lens 223, and the mirror 226, the half mirror 225, and the collimating lens 224 function as a light guiding portion that introduces light passed through the plurality of optical heads 10 into the spectrometer 23.

Thus, although provided with the collimating lenses 221 - 224, the half mirror 225, and the mirror 226 in place of the branching optical fiber 22 and the optical fiber 11, the confocal measurement device 100c according to the fourth modification example is capable of measuring the profile at multiple points on the measurement object 200 in the same manner as the confocal measurement device 100 illustrated in FIG. 1. Moreover, the configuration of the confocal measurement device 100c facilitates placing optical filters between the optical heads 10 and the spectrometer 23 compared to a configuration where the branching optical fiber 22 and the optical fiber 11 are used.

### Second Embodiment

Instead of separating the wavelengths of light including an axial chromatic aberration into wavelength bands for each of the optical heads to measure the profile at multiple points on the measurement object a confocal measurement device according to the second embodiment matches the timing light is emitted from a light source to obtain the peak wavelength matching that light emitted from the optical heads.

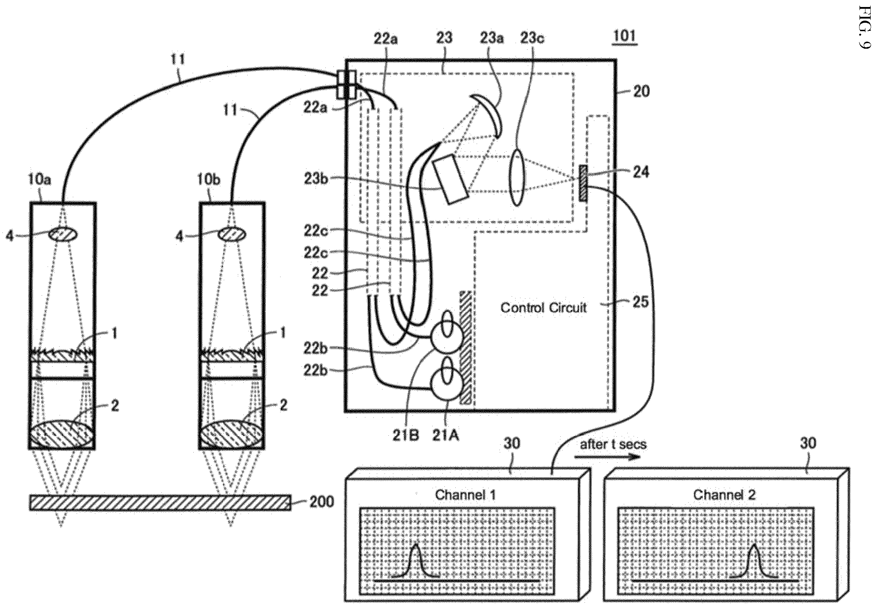

FIG. 9 is a schematic view illustrating a configuration of a confocal measurement device according to a second embodiment of the present invention. The confocal measurement device 101 illustrated in FIG. 9 uses the confocal optics provided in a plurality of optical heads (two, in the example illustrated in FIG. 9) to measure the profile at multiple points (two, in the example illustrated in FIG. 9) on the measurement object 200. The measurement target 200 measured by the confocal measurement device 101 may be the cell gap in a liquid crystal display panel. Note that the portions of the confocal measurement device 101 illustrated in FIG. 9 identical to those in the confocal measurement device 100 illustrated in FIG. 1 are given the same reference numerals, and an explanation therefor is not repeated.

The confocal measurement device 101 is provided with two light sources, i.e., a first light source 21A and a second light source 21B, which allow the confocal measurement device 101 to match the timing light is emitted from the light sources in order to obtain the peak wavelength matching that light emitted from the optical heads 10. Each of the optical heads 10 in the confocal measurement device 101 includes a branching optical fiber 22. A branching optical fiber 22 guides light output from the first light source 21A to the corresponding optical fiber 11 and guides the light returning from the corresponding optical head 10 to the spectrometer 23 via the optical fiber 11; the other branching optical fiber 22 guides light output from the second light source 21B to the corresponding optical fiber 11 and guides the light returning from the corresponding optical head 10 to the spectrometer 23 via the optical fiber 11. The branching optical fibers 22 include an optical fiber 22a extending from the optical heads 10 and connected to the optical fibers 11, and two optical fibers 22b, 22c on the opposite side. The optical fibers 22b are connected to the white LED 21, and the optical fibers 22c are connected to spectrometer 23. The optical fiber 11 and the branching optical fiber 22 provided to each of the plurality of optical heads 10 make up the light guiding unit that introduces light passing through each of the optical heads 10 into the spectrometer 23.

The confocal measurement device 101 turns on the first light source 21A (the second light source 21B is off) causing light to pass through the first optical head 10a, turns on the second light source 21B t seconds later (the first light source 21A is now off) causing light to pass through the second optical head 10b, and thereby offsets the timing when light passes through the optical heads 10. In other words, the confocal measurement device 101 matches the timing that the first light source 21A or the second light source 21B emits light to obtain the peak wavelength matching that light emitted from the optical heads 10.

The confocal measurement device 101 illustrated in FIG. 9 displays results in "Channel 1" and results in "Channel 2" on the monitor 30. Channel 1 represents the results from turning on the first light source 21A and using the first optical head 10a to measure the profile of the measurement object 200. Channel 2 represents the results from turning on the second light source 21B and using the second optical head 10b to measure the profile of the measurement object 200.

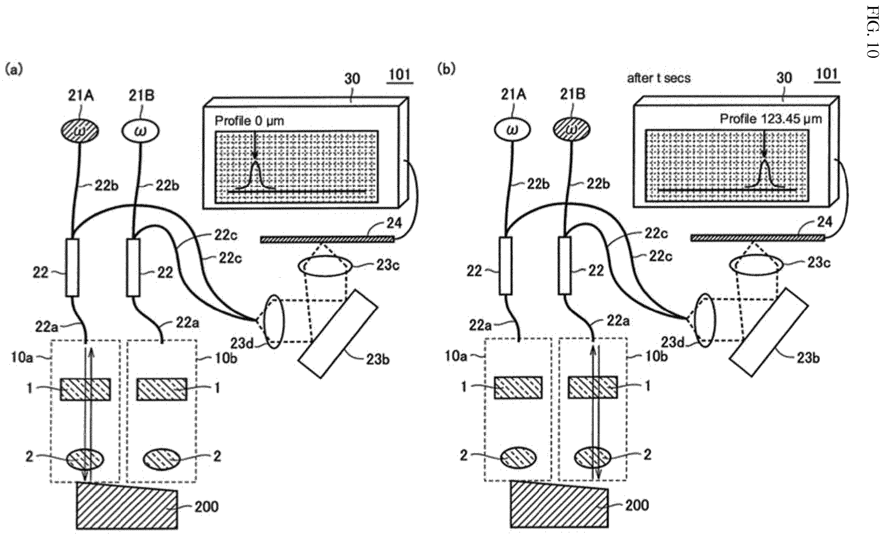

The operations of the confocal measurement device 101 are described in further detail below. FIG. 10 is a schematic view for describing the operation of the confocal measurement device 101 according to the second embodiment of the present invention. FIG. 10(a) in particular is a schematic view for describing the operations of the confocal measurement device 101 when the first light source 21A is turned on (and the second light source 21B is off). On the other hand, FIG. 10(b) is a schematic view for describing the operations of the confocal measurement device 101 when the second light source 21B is turned on (and the first light source 21A is off). Additionally, parts of the configuration not used in the description below of the confocal measurement device 101 in FIG. 10 are omitted from the drawings even if already depicted for the confocal measurement device 101 in FIG. 9. Finally, the confocal measurement device 101 illustrated in FIG. 9 is provided with a spectrometer 23 that uses a collimating lens 23d in place of the concave mirror 23a.

First, when the first light source 21A is turned on (and the second light source 21B is off) as illustrated in FIG. 10(a), light passes through the first optical head 10a; however, light does not pass through the second optical head 10b. That is, the confocal measurement device 101 functions identically to a configuration where the profile of the measurement object 200 is measured using only the first optical head 10a.

The confocal measurement device 101 generates an axial chromatic aberration in the light from the first light source 21A using the diffraction lens 1 in the first optical head 10a, and concentrates the light including the chromatic aberration onto the measurement object 200 using the objective 2 in the first optical head 10a. The light in focus on the measurement object 200 is guided from the optical fiber 22c to the diffraction grating 23b via the collimating lens 23d, and thereby the light dispersed by the aforementioned diffraction grating 23b is introduced to the imaging element 24 by the condenser 23c in the confocal measurement device 101. The control circuit 25 obtains a peak intensity value from optical spectral waveforms representing the output signals from the imaging element 24, and identifies the wavelength of the light in focus on the measurement object 200. Using the relationship preliminarily established between the wavelength of light that focuses on the measurement object 200 and the profile of the measurement object 200, the control circuit 25 derives the profile of the measurement object 200 measured through the first optical head 10a. The confocal measurement device 101 draws a spectral waveform representing light incident on the imaging element 24 on the monitor 30, and outputs the profile of the measurement object 200 measured by the first optical head 10a.

Subsequently, t seconds later when the second light source 21B is turned on (and the first light source 21A is off) as illustrated in FIG. 10(b), light passes through the second optical head 10b; however, light does not pass through the first optical head 10a. That is, the confocal measurement device 101 functions identically to a configuration where the profile of the measurement object 200 is measured using only the second optical head 10b.

The confocal measurement device 101 generates an axial chromatic aberration in the light from the second light source 21B using the diffraction lens 1 in the second optical head 10b, and concentrates the light including the chromatic aberration onto the measurement object 200 using the objective 2 in the second optical head 10b. The light in focus on the measurement object 200 is guided from the optical fiber 22c to the diffraction grating 23b via the collimating lens 23d, and thereby the light dispersed by the aforementioned diffraction grating 23b is introduced onto the imaging element 24 by the condenser 23c in the confocal measurement device 101. The control circuit 25 obtains a peak intensity value from optical spectral waveforms representing the output signals from the imaging element 24, and identifies the wavelength of the light in focus on the measurement object 200. Using the relationship preliminarily established between the wavelength of light that focuses on the measurement object 200 and the profile of the measurement object 200, the control circuit 25 derives the profile of the measurement object 200 measured through the second optical head 10b. Finally, the confocal measurement device 101 draws a spectral waveform representing light incident on the imaging element 24 on the monitor 30, and outputs the profile of the measurement object 200 measured by the second optical head 10b.

Thus, because the control circuit 25 matches the timing the light sources emit light to obtain the peak wavelength matching that light emitted from the light sources and thereby measure the profile at multiple points on a measurement object 200, the confocal measurement device 101 according to the second embodiment of the present invention may thus use an imaging element 24 wherein the light receiving elements 24a are arranged one-dimensionally, without requiring an imaging element where the light receiving elements are arranged two-dimensionally. Therefore, compared to a device using an imaging element where the light receiving elements are arranged two-dimensionally, the confocal measurement device 101 according to the second embodiment of the present invention may acquire the measurement signals more quickly, allowing for high-speed measurement of the profile at multiple points on the measurement object 200. Finally, because the confocal measurement device 101 according to the second embodiment of the present invention is provided with the imaging element 24 where the light receiving elements 24a are arranged one-dimensionally, the confocal measurement device has a smaller footprint than a device provided with an imaging element where the light receiving elements are arranged two-dimensionally.

Additionally, the imaging element 24 wherein the light receiving elements 24a are arranged one-dimensionally, is cheaper than an imaging element where the light receiving elements are arranged two-dimensionally, thereby reducing the production cost of the confocal measurement device 101. The confocal measurement device 101 according to the second embodiment of the present invention partitions the wavelength band, and therefore the imaging element 24 may be divided into measurement signal channels for each of the optical heads 10. The confocal measurement device 101 according to the second embodiment of the present invention does not divide the light intensity (amount of light) by matching the timing light is emitted from the light sources to obtain a peak wavelength matching that light emitted from the optical heads 10, and thus the measurement accuracy of the device can be maintained without degrading the S/N ratio of the measurement signal.

As above described the confocal measurement device 101 according to the second embodiment of the present invention is provided with a first light source 21A and a second light source 21B corresponding to each of the plurality of optical heads 10. The confocal measurement device 101 alternatively and sequentially turns on the first light source 21A and the second light source 21B to offset the timing at which light passes through the optical heads 10. However, the present invention is not limited to this particular configuration for offsetting the timing at which light is emitted. For instance, the confocal measurement device 101 may have a single light source, or a single light source for a certain number of individual optical heads 10. Either the controller 20 or the optical heads 10 may be provided with a shutter to control whether or not light from the light source enters the optical heads 10. The controller 20 or optical heads 10 may thus control the shutter to offset the timing at which light passes through the optical heads 10.

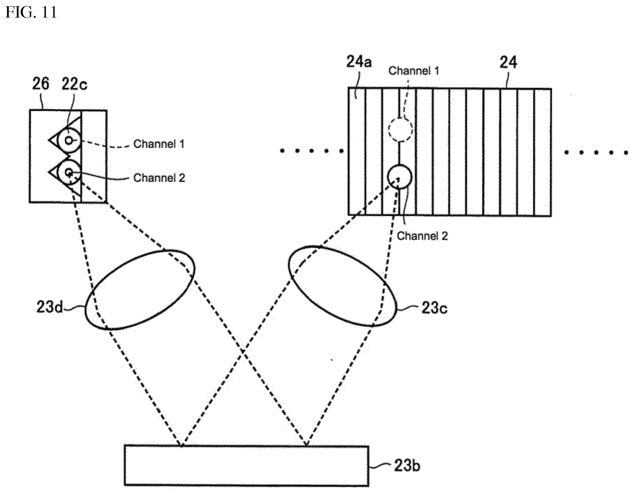

Moreover, as described for the confocal measurement device 101 according to the second embodiment of the present invention, a plurality of optical fibers 22c (two in FIG. 9) are bundled together to guide light into the spectrometer 23. FIG. 11 is a schematic view illustrating how the imaging element 24 measures light entering the spectrometer 23 from a plurality of optical fibers 22c that are bundled together. The two optical fibers 22c illustrated in FIG. 11 are bundled in a V-groove substrate 26, and are arranged vertically in a row in the diagram. The light output from the two optical fibers 22c travels via the collimating lens 23d, striking the diffraction grating 23b in the spectrometer 23. The diffraction grating 23b disperses the light, and the condenser 23c concentrates the light on the imaging element 24. The two optical fibers 22c are arranged along a direction orthogonal to a plane containing the direction along which the diffraction grating 23b changes the focal point of the wavelengths of reflected light. The imaging element 24 is also arranged so that each of the light receiving elements 24a are aligned along the direction the diffraction grating 23b changes the focal point of each wavelength in the reflected light.

Therefore, the imaging element 24 is configured so that the light receiving elements 24a are an oblong in a direction orthogonal (vertically in the drawing) to the direction the light receiving elements 24a are aligned (horizontally in the drawing). In other words, configuring the imaging element 24 as an oblong allows the light receiving elements 24a to be shaped in such a way that the light receiving elements 24a can receive the concentrated light even when the light concentrates along the vertical direction of the light receiving elements 24a (vertically in the drawing), and not the direction along which the light receiving elements 24a are arranged (horizontally in the drawing). The imaging element 24 is thus easier to align when configured in this way, because an increase in the number of optical fibers 22c does not necessarily increase the variation in the focal position of the light passing through the condenser 23c in the direction orthogonal to the light receiving plane of the imaging element 24.

### Third Embodiment

The confocal measurement device according to a third embodiment of the present invention combines separating the wavelengths of light including an axial chromatic aberration into wavelength bands for each of the optical heads to obtain a peak wavelength and matching the timing light is emitted from a light source to obtain the peak wavelength matching that light emitted from the optical heads 10 to measure the profile at multiple points on a measurement object 200.

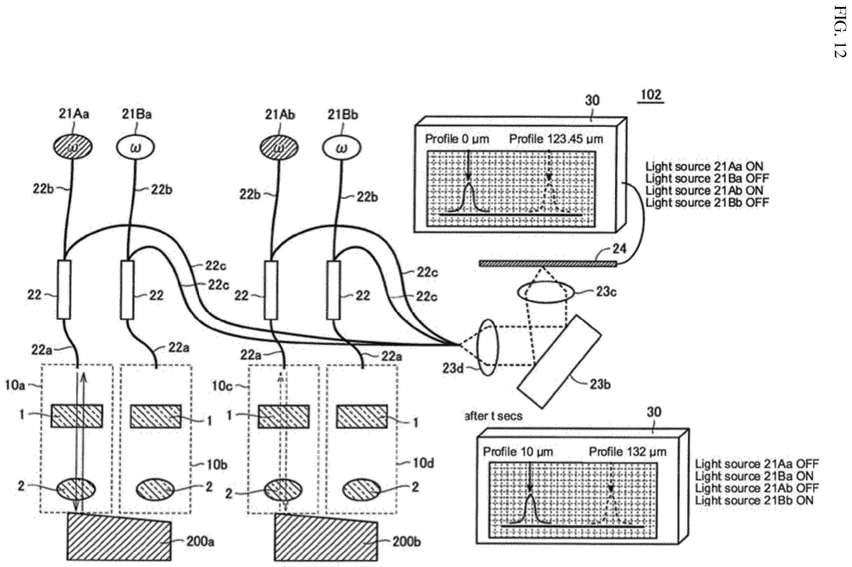

FIG. 12 is a schematic view illustrating a configuration of a confocal measurement device according to a third embodiment of the present invention. The confocal measurement device 102 illustrated in FIG. 12 uses the confocal optics provided in a plurality of optical heads (four, in the example illustrated in FIG. 12) to measure the profile at multiple points (four, in the example illustrated in FIG. 12) on the measurement object 200. The measurement object 200 measured by the confocal measurement device 102 may be the cell gap in a liquid crystal display panel. Note that the portions of the confocal measurement device 102 illustrated in FIG. 12 identical to those in the confocal measurement device 100 illustrated in FIG. 1 are given the same reference numerals, and an explanation therefor is not repeated. Additionally, parts of the configuration not used in the description below of the confocal measurement device 102 illustrated in FIG. 12 are omitted from the drawings even if already depicted for the confocal measurement device 100 as illustrated in FIG. 1. Finally, the confocal measurement device 102 illustrated in FIG. 12 is provided with a spectrometer 23 that uses a collimating lens 23d in place of the concave mirror 23a.

The confocal measurement device 102, provided with four light sources for the four optical heads 10, separates the wavelengths of light including an axial chromatic aberration into wavelength bands for each of the optical heads, and offsets the timing light is emitted from the light sources. Therefore, the four light sources are divided into a first light source 21Aa and a second light source 21Ba that emit light in a certain wavelength band, and a third light source 21Ab and a fourth light source 21Bb that emit light in a wavelength band different from the wavelength band of the first light source 21Aa and the second light source 21Ba. More specifically, the first light source 21Aa and the second light source 21Ba emit, for instance, light with wavelengths of 400 nm to 600 nm, and the third light source 21Ab and the fourth light source 21Bb emit light with wavelengths of 600 nm to 800 nm.

The light from the first light source 21Aa enters the first optical head 10a via a branching optical fiber 22 and an optical fiber 11. The light from the second light source 21Ba enters the second optical head 10b via a branching optical fiber 22 and an optical fiber 11. The light from the third light source 21Ab enters a third optical head 10c via a branching optical fiber 22 and an optical fiber 11. The light from the fourth light source 21Bb enters a fourth optical head 10d via a branching optical fiber 22 and an optical fiber 11.

The first optical head 10a and the second optical head 10b cause light to concentrate on a measurement object 200a, and measure the profile on the measurement object 200a at the position the light concentrates. The third optical head 10c and the fourth optical head 10d also cause light to concentrate on a measurement object 200b, and measure the profile on the measurement object 200b at the position the light concentrates. Note that the measurement object 200a and the measurement object 200b may be the same or different material. For instance, the measurement object 200a may be a reference material for the measurement object 200b.

The confocal measurement device 102 partitions the wavelengths of light from the first light source 21Aa and second light source 21Ba, and from the third light source 21Ab and the fourth light source 21Bb in which an axial chromatic aberration is generated for each of the optical heads 10, and offsets the timing light is emitted from the first light source 21Aa and third light source 21Ab, and from the second light source 21Ba and the fourth light source 21Bb for each of the optical heads 10.

More specifically, the confocal measurement device 102 first turns on the first light source 21Aa and the third light source 21Ab (the second light source 21Ba and the fourth light source 21Bb are off) to cause light to pass through the first optical head 10a and the third optical head 10c.

Although light passes through the first optical head 10a and the third optical head 10c when the confocal measurement device 102 turns on the first light source 21Aa and the third light source 21Ab, the light passing through the first optical head 10a and the light passing through the third optical head 10c are in separate wavelength bands. The confocal measurement device 102 is therefore configured to separate the wavelengths of light including an axial chromatic aberration using the first optical head 10a and the third optical head 10c, similarly to the confocal measurement device 100b described with reference to FIG. 7.

That is, in the confocal measurement device 102 the diffraction lens 1 in the first optical head 10a and in the third optical head 10c generate an axial chromatic aberration in the light from the first light source 21Aa and from the third light source 21Ab. The respective objectives 2 then concentrate the light including the chromatic aberration onto the measurement object 200a and the measurement object 200b. The light in focus on the measurement object 200a and on the measurement object 200b is guided from the respective optical fibers 22c to the diffraction grating 23b via the collimating lens 23d, and thereby the light dispersed by the aforementioned diffraction grating 23b is introduced onto the imaging element 24 by the condenser 23c in the confocal measurement device 102. The confocal measurement device 102 draws a spectral waveform representing light incident on the imaging element 24 on the monitor 30, and outputs the profiles of the measurement object 200a and the measurement object 200b measured by the first optical head 10a and the third optical head 10c respectively. For instance, the confocal measurement device 102 may output the profile of the measurement object 200a measured by the first optical head 10a as 0 µm, and may output the profile of the measurement object 200b measured by the third optical head 10c as 123.45 µm.

Subsequently, t seconds later, the confocal measurement device 102 turns on the second light source 21Ba and the fourth light source 21Bb (the first light source 21Aa and the third light source 21Ab are off) causing light to pass through the second optical head 10b and the fourth optical head 10d.

Although light passes through the second optical head 10b and the fourth optical head 10d when the confocal measurement device 102 turns on the second light source 21Ba and the fourth light source 21Bb, the light passing through the second optical head 10b and the light passing through the fourth optical head 10d are in separate wavelength bands. The confocal measurement device 102 is therefore configured to separate the wavelengths of light including an axial chromatic aberration using the second optical head 10b and the fourth optical head 10d, similarly to the confocal measurement device 100b described with reference to FIG. 7.

Namely, in the confocal measurement device 102 the diffraction lens 1 in the second optical head 10b and in the fourth optical head 10d generate an axial chromatic aberration in the light from the second light source 21Ba and from the fourth light source 21Bb. The respective objectives 2 then concentrate the light including the chromatic aberration onto the measurement object 200a and the measurement object 200b. The light in focus on the measurement object 200a and on the measurement object 200b is guided from the respective optical fibers 22c to the diffraction grating 23b via the collimating lens 23d, and thereby the light separated by the aforementioned diffraction grating 23b is introduced onto the imaging element 24 by the condenser 23c in the confocal measurement device 102. The confocal measurement device 102 draws a spectral waveform representing light incident on the imaging element 24 on the monitor 30, and outputs the profiles of the measurement object 200a and the measurement object 200b measured by the second optical head 10b and the fourth optical head 10d respectively. For instance, the confocal measurement device 102 may output the profile of the measurement object 200a measured by the second optical head 10b as 10 µm, and may output the profile of the measurement object 200b measured by the fourth optical head 10d as 132 µm.

Hereby, the confocal measurement device 102 is able to measure the profile at two points on the measurement object 200a using the first optical head 10a and the second optical head 10b, and measure the profile at two points on the measurement object 200b using the third optical head 10c and the fourth optical head 10d. Thus using the first optical head 10a through fourth optical head 10d, the confocal measurement device 102 is capable of measuring the profile at four points between the measurement object 200a and the measurement object 200b.

As exemplified above, the profile at multiple points on a measurement object 200 may be measured by obtaining a peak wavelength for each region in the imaging element 24 corresponding to a partition of the wavelength band, or by obtaining the wavelength of a peak value corresponding to the light source that emitted light. The confocal measurement device 102 according to the third embodiment of the present invention combines these methods and is thus capable of measuring the profiles of even more measurement objects 200. The confocal measurement device 102 provides effects identical to those provided by the confocal measurement devices according to the above-described first and second embodiments.

In the confocal measurement device 102 according to the third embodiment of the present invention, the four light sources are divided into a first light source 21Aa and a second light source 21Ba that emit light in a certain wavelength band, and a third light source 21Ab and a fourth light source 21Bb that emit light in a wavelength band different from the wavelength band of the first light source 21Aa and the second light source 21Ba to thereby partition the wavelength band. However, the confocal measurement device 102 according to the third embodiment of the present invention is not limited thereto, and may use four light sources that emit light in the same wavelength band. In this case, the first optical head 10a and the second optical head 10b may be provided with the first optical filter 3a illustrated in FIG. 1, and the third optical head 10c and the fourth optical head 10d may be provided with the second optical filter 3b illustrated in FIG. 1, to partition the wavelength band.

In the confocal measurement devices according to the first to third embodiments of the present invention, the axial chromatic aberration is generated using the diffraction lens 1 in the optical heads 10. However, the present invention is not limited to this configuration. A confocal measurement device according to the present invention may use a single lens, or, optics components combining a plurality of lenses to generate the axial chromatic aberration in place of the diffraction lens 1.

Finally, in the confocal measurement devices according to the first to third embodiments of the present invention were described as configured with two or four optical heads 10. However, these are merely examples and the embodiments of the present invention may include even more optical heads 10.

All aspects of the embodiments disclosed should be considered merely examples and not limitations as such. The scope of the present invention is not limited to the above description but to the scope of the claims, and is intended to include all modifications allowable by the scope of the claims.

### Reference Numerals

- 1: Diffraction lens;
- 2: Objective;
- 3a: First optical filter
- 3b: Second optical filter;
- 4, 23c: Condenser;
- 5: Beam splitter;
- 10, 10a - 10d: Optical head;
- 11, 22a, 22b, 22c, 22d: Optical fiber;
- 20: Controller;
- 21: Light source;
- 22: Branching optical fiber;
- 23: Spectrometer;
- 23a: Concave mirror;
- 23b: Diffraction grating;
- 24: Imaging element;
- 25: Control circuit;
- 26: V-groove substrate;
- 30: Monitor;
- 100, 100a, 100b, 101, 102: Confocal measurement device;
- 200, 200a, 200b: Measurement target.

## Claims

1. A confocal measurement device (101) comprising:
a plurality of light sources (21a, 21b) for emitting polychromatic light of different wavelength bands;
a plurality of optical heads (10a, 10b) each comprising confocal optics for generating an axial chromatic aberration in the light output from the light sources (21a, 21b), irradiating a measurement object (200, 200a, 200b) at multiple points with the light including the axial chromatic aberration, and allowing the light reflected by the measurement object (200, 200a, 200b) to pass back through the plurality of the optical heads (10a, 10b), when the light is in focus on the measurement object (200, 200a, 200b);
a single spectrometer unit (23) for dispersing the light;
a light guiding unit (22a, 22b, 22c, 22d) for introducing the light passed through the plurality of optical heads (10a, 10b) into the spectrometer (23);
a light receiving unit (24) including light receiving element arranged one-dimensionally along the dispersion direction of the spectrometer (23) for receiving the light dispersed by the spectrometer (23); and
a control unit (25) for obtaining a peak wavelength corresponding to each of the plurality of optical heads (10a, 10b) from the light received at the light receiving unit (24),
wherein a light source (21a, 21b) is provided for each of the plurality of optical heads (10a, 10b); and
wherein the control unit (25) is configured to control the timing at which the light sources (21a, 21b) emit light so that the light sources (21a, 21b) emit light in a sequence, and to match the timing at which the light sources (21a, 21b) emit light to obtain a peak wavelength matching that light emitted from the light sources (21a, 21b).

2. The confocal measurement device according to claim 1, wherein the plurality of optical heads (10a, 10b) includes optical components for transmitting or blocking mutually different wavelength bands;
the optical heads (10a, 10b) being configured for irradiating the measurement object (200, 200a, 200b) with the light transmitted or blocked by the optical components; and
the control unit (25) being configured for obtaining a peak wavelength for each region in the light receiving unit (24) corresponding to the wavelength band transmitted or blocked by the optical components.

3. The confocal measurement device according to claim 2, wherein the optical components are provided at a location where light from the light sources (21a, 21b) enters the optical heads (10a, 10b).

4. The confocal measurement device according to claim 1, wherein the light sources (21a, 21b) provided for each of the plurality of optical heads (10a, 10b) are configured for outputting light in mutually different wavelength bands; and
the control unit (25) is configured for obtaining a peak wavelength for each region in the light receiving unit (24) corresponding to the wavelength band output by the light sources (21a, 21b).

5. The confocal measurement device (101) according to claim 1, wherein
the plurality of optical heads (10a, 10b) each includes optical components for transmitting or blocking mutually different wavelength bands;
the optical heads (10a, 10b) are configured for irradiating the measurement object (200, 200a, 200b) with the light transmitted or blocked by the optical components; and
the control unit (25) is configured to match the timing at which the light sources (21a, 21b) emit light to obtain a peak wavelength matching the light source (21a, 21b) that emitted light for each a region in the light receiving unit (24) corresponding to the wavelength band transmitted or blocked by the optical components.

6. The confocal measurement device (101) according to claim 1, wherein the light receiving element in the light receiving unit (24) is an oblong in which the length along a direction orthogonal to the direction of one dimensional arrangement is longer than the length along the direction of one dimensional arrangement.

7. The confocal measurement device (101) according to claim 5, wherein the light receiving element in the light receiving unit (24) is an oblong in which the length along a direction orthogonal to the direction of one dimensional arrangement is longer than the length along the direction of one dimensional arrangement.

8. The confocal measurement device according to claim 1, wherein the optical heads (10a, 10b) include:
a diffraction lens (1) for generating an axial chromatic aberration in the light output from the light source (21a, 21b);
an objective (2) arranged toward the measurement object (200, 200a, 200b) relative to the diffraction lens (1) for concentrating light including the axial chromatic aberration onto the measurement object (200, 200a, 200b); and
a pinhole for allowing light concentrated by the objective and in focus on the measurement object (200, 200a, 200b) to pass therethrough.

## Patentansprüche

1. Konfokale Messvorrichtung (101), aufweisend:
mehrere Lichtquellen (21) zum Aussenden von polychromatischen Licht in verschiedenen Wellenlängenbändern;
mehrere Optikköpfe (10a, 10b) mit jeweils einer konfokalen Optik zum Erzeugen einer axialen chromatischen Aberration in dem von den Lichtquellen (21) ausgesendeten Lichts, Bestrahlen eines Messobjekt (200, 200a, 200b) an mehreren Stellen mit dem Licht, das die axiale chromatische Aberration aufweist, und Erlauben eines Passierens des von dem Messobjekt (200, 200a, 200b) reflektierten Lichts durch die mehreren Optikköpfe (10a, 10b), wenn das Licht bei dem Messobjekt (200, 200a, 200b) in Fokus ist;
eine einzige Spektrometereinheit (23) zum Dispergieren des Lichts;
eine Lichtleiteinheit (11, 22a, 22b, 22c, 22d) zum Einführen des durch die mehreren Optikköpfe (10a, 10b) propagierten Lichts in das Spektrometer (23);
eine Lichtempfangseinheit (24) mit einem Lichtempfangselement, das eindimensional entlang der Dispersionsrichtung des Spektrometers (23) angeordnet ist zum Empfangen des von dem Spektrometer (23) dispergierten Lichts; und
eine Steuereinheit (25) zum Ermitteln einer Peakwellenlänge entsprechend jedem der mehreren Optikköpfe (10a, 10b) aus dem von der Lichtempfangseinheit (24) empfangenen Licht,
wobei eine Lichtquelle (21) für jeden der mehreren Optikköpfe (10a, 10b) bereitgestellt ist; und
wobei die Steuereinheit (25) dazu eingerichtet ist, die Zeit, zu der die Lichtquellen (21) Licht aussenden, zu steuern, sodass die Lichtquellen (21) Licht nacheinander aussenden, und die Zeit, zu der die Lichtquellen (21) Licht aussenden derart anzupassen, dass eine Peakwellenlänge ermittelt wird, welche zu dem von der Lichtquelle (21) ausgesendete Licht passt.

2. Konfokale Messvorrichtung nach Anspruch 1, wobei die mehreren Opticköpfe (10a, 10b) optische Komponenten aufweisen zum Transmittieren oder Abblocken von voneinander unterschiedlichen Wellenlängenbändern;
die Optikköpfe (10a, 10b) dazu eingerichtet sind, das Messobjekt (200, 200a, 200b) mit dem Licht zu bestrahlen, das von optischen Komponenten transmittiert oder abgeblockt wurde; und
die Steuereinheit (25) dazu eingerichtet ist, eine Peakwellenlänge für jeden Bereich in der Lichtempfangseinheit (24) entsprechend dem von den optischen Komponenten transmittierten oder abgeblockten Wellenlängenband zu ermitteln.

3. Konfokale Messvorrichtung nach Anspruch 2, wobei die optische Komponenten an einer Stelle bereitgestellt wird, an der Licht von der Lichtquelle (21) in die Optikköpfe (10a, 10b) eintritt.

4. Konfokale Messvorrichtung nach Anspruch 1, wobei die für jeden der mehreren Optikköpfe (10a, 10b) bereitgestellten Lichtquellen (21) dazu eingerichtet sind, Licht in voneinander unterschiedlichen Wellenlängenbändern auszugeben; und
die Steuereinheit (25) dazu eingerichtet ist, eine Peakwellenlänge für jeden Bereich in der Lichtempfangseinheit (24) entsprechend dem von den Lichtquellen (21) ausgegebenen Wellenlängenband zu ermitteln.

5. Konfokale Messvorrichtung (101) nach Anspruch 1, wobei
die mehreren Optikköpfe (10a, 10b) jeweils optische Komponenten zum Transmittieren oder Abblocken von voneinander verschiedenen Wellenlängenbändern aufweisen;
die Optikköpfe (10a, 10b) dazu eingerichtet sind, das Messobjekt (200, 200a, 200b) mit dem von den optische Komponenten transmittierten oder abgeblockten Licht zu bestrahlen; und
die Steuereinheit (25) dazu eingerichtet ist, die Zeit, zu der die Lichtquellen (21) Licht aussenden anzupassen, um eine Peakwellenlänge passend zu der Lichtquelle (21) zu ermitteln, die für jeden Bereich in der Lichtempfangseinheit (24) Licht aussendet entsprechend dem von den optischen Komponenten transmittierten oder abgeblockten Wellenlängenband.

6. Konfokale Messvorrichtung (101) nach Anspruch 1, wobei das Lichtempfangselement in der Lichtempfangseinheit (24) ein Rechteck ist, und die Länge entlang einer Richtung orthogonal zu der Richtung einer ein-dimensionalen Anordnung länger ist als die Länge entlang der Richtung der ein-dimensionalen Anordnung.

7. Konfokale Messvorrichtung (101) nach Anspruch 5, wobei das Lichtempfangselement in der Lichtempfangseinheit (24) ein Rechteck ist, und die Länge entlang einer Richtung orthogonal zu der Richtung einer ein-dimensionalen Anordnung länger ist als die Länge entlang der Richtung der ein-dimensionalen Anordnung.

8. Konfokale Messvorrichtung nach Anspruch 1, wobei die Optikköpfe (10a, 10b) aufweisen:
eine Beugungslinse (1) zum Erzeugen der axialen chromatischen Aberration des von der Lichtquelle (21) ausgesendeten Lichts;
ein Objektiv (2), das relativ zu der Beugungslinse (1) in Richtung des Messobjekts (200, 200a, 200b) angeordnet ist zum Bündeln von die axiale chromatische Aberration aufweisenden Lichts auf das Messobjekt (200, 200a, 200b); und
eine Aperturblende zum Durchlassen von Licht, das von dem Objektiv gebündelt wurde und an dem Messobjekt (200, 200a, 200b) in Fokus ist.

## Revendications

1. Dispositif de mesure confocal (101), comprenant :
une pluralité de sources de lumière (21a, 21b) destinées à émettre de la lumière polychromatique de différentes bandes de longueur d'onde ;
une pluralité de têtes optiques (10a, 10b) comprenant individuellement de l'optique confocale destinée à générer une aberration chromatique axiale dans la sortie de lumière des sources de lumière (21a, 21b), à exposer un objet de mesure (200, 200a, 200b) au niveau de points multiples à un rayonnement de la lumière comprenant l'aberration chromatique axiale, et à laisser passer la lumière réfléchie par l'objet de mesure (200, 200a, 200b) en retour à travers les têtes de la pluralité de têtes optiques (10a, 10b), lorsque la lumière est focalisée sur l'objet de mesure (200, 200a, 200b) ;
une unique unité spectromètre (23) destinée à disperser la lumière ;
une unité de guidage de lumière (22a, 22b, 22c, 22d) destinée à introduire la lumière ayant traversé les têtes de la pluralité de têtes optiques (10a, 10b) dans le spectromètre (23) ;
une unité de réception de lumière (24) comprenant un élément de réception de lumière disposé de manière unidimensionnelle dans la direction de dispersion du spectromètre (23) pour recevoir la lumière dispersée par le spectromètre (23) ; et
une unité de commande (25) destinée à obtenir une longueur d'onde maximale correspondant à chaque tête de la pluralité de têtes optiques (10a, 10b) à partir de la lumière reçue au niveau de l'unité de réception de lumière (24),
dans lequel une source de lumière (21a, 21b) est prévue pour chaque tête de la pluralité de têtes optiques (10a, 10b) ; et
dans lequel l'unité de commande (25) est configurée pour commander la temporisation à laquelle les sources de lumière (21a, 21b) émettent de la lumière, de sorte que les sources de lumière (21a, 21b) émettent de la lumière selon une séquence, et pour adapter la temporisation à laquelle les sources de lumière (21a, 21b) émettent de la lumière pour obtenir une longueur d'onde maximale correspondant à celle de la lumière émise à partir des sources de lumière (21a, 21b).

2. Dispositif de mesure confocal selon la revendication 1, dans lequel les têtes de la pluralité de têtes optiques (10a, 10b) comprennent des composants optiques destinés à transmettre ou à bloquer des bandes de longueur d'onde mutuellement différentes ;
les têtes optiques (10a, 10b) étant conçues pour exposer l'objet de mesure (200, 200a, 200b) à un rayonnement de la lumière transmise ou bloquée par les composants optiques ; et
l'unité de commande (25) étant configurée pour obtenir une longueur d'onde maximale pour chaque région de l'unité de réception de lumière (24) correspondant à la bande de longueur d'onde transmise ou bloquée par les composants optiques.

3. Dispositif de mesure confocal selon la revendication 2, dans lequel les composants optiques sont disposés à une position au niveau de laquelle de la lumière provenant des sources de lumière (21a, 21b) pénètre les têtes optiques (10a, 10b).

4. Dispositif de mesure confocal selon la revendication 1, dans lequel les sources de lumière (21a, 21b) prévues pour chaque tête de la pluralité de têtes optiques (10a, 10b) sont conçues pour délivrer de la lumière dans des bandes de longueur d'onde mutuellement différentes ; et
l'unité de commande (25) est configurée pour obtenir une longueur d'onde maximale pour chaque région de l'unité de réception de lumière (24) correspondant à la bande de longueur d'onde délivrée par les sources de lumière (21a, 21b).

5. Dispositif de mesure confocal (101) selon la revendication 1, dans lequel
les têtes de la pluralité de têtes optiques (10a, 10b) comprennent individuellement des composants optiques destinés à transmettre ou à bloquer des bandes de longueur d'onde mutuellement différentes ;
les têtes optiques (10a, 10b) sont conçues pour exposer l'objet de mesure (200, 200a, 200b) à un rayonnement de la lumière transmise ou bloquée par les composants optiques ; et
l'unité de commande (25) est configurée pour adapter la temporisation à laquelle les sources de lumière (21a, 21b) émettent de la lumière pour obtenir une longueur d'onde maximale correspondant à la source de lumière (21a, 21b) qui a émis de la lumière pour chaque région de l'unité de réception de lumière (24) correspondant à la bande de longueur d'onde transmise ou bloquée par les composants optiques.

6. Dispositif de mesure confocal (101) selon la revendication 1, dans lequel l'élément de réception de lumière de l'unité de réception de lumière (24) est un oblong dans lequel la longueur dans une direction orthogonale à la direction d'agencement unidimensionnel est plus longue que la longueur dans la direction d'agencement unidimensionnel.

7. Dispositif de mesure confocal (101) selon la revendication 5, dans lequel l'élément de réception de lumière de l'unité de réception de lumière (24) est un oblong dans lequel la longueur dans une direction orthogonale à la direction d'agencement unidimensionnel est plus longue que la longueur dans la direction d'agencement unidimensionnel.

8. Dispositif de mesure confocal selon la revendication 1, dans lequel les têtes optiques (10a, 10b) comprennent :
une lentille de diffraction (1) destinée à générer une aberration chromatique axiale dans la lumière délivrée à partir de la source de lumière (21a, 21b) ;
un objectif (2) disposé en direction de l'objet de mesure (200, 200a, 200b) par rapport à la lentille de diffraction (1), destiné à concentrer de la lumière comprenant l'aberration chromatique axiale sur l'objet de mesure (200, 200a, 200b) ; et
un trou d'aiguille destiné à se laisser traverser par de la lumière concentrée par l'objectif et focalisée sur l'objet de mesure (200, 200a, 200b).
